# EUROPEAN PATENT APPLICATION

(11) **EP 2 518 339 A1**
(43) Date of publication of application: **31.10.2012**
(21) Application number: 12153446.5
(22) Date of filing: 01.02.2012
(51) Int. Cl.: F16B 39/282

(54) **Flanged hexagon head bolt**

(30) Priority: 26.04.2011 JP 2011098266
(71) Applicant: NSK Ltd., Tokyo 141-8560 (JP)
(72) Inventor: Yamada, Yasuhisa, Gunma, 371-8528 (JP)
(74) Representative: HOFFMANN EITLE

(57) **Abstract**

A flanged hexagon head bolt 81 comprises a male screw 812 at one end thereof and a hexagon head 814 with a circular disk shape flange 813 at other end thereof, recessed and protruded portions 816, 818 which are configured in a ring-like shape are provided at an outer periphery of a bearing face 815 of the circular disk shape flange 813, whereby the protruded portion 816, 818 is not protruded from the bearing face 815 of the circular disk shape flange 813.

## Description

### BACKGROUND

The present invention relates to a flanged hexagon head bolt, particularly to a flanged hexagon head bolt for fastening a universal joint of connecting shafts which transmit rotation of a steering shaft to the shaft.

In a steering device which steers a front wheel of a vehicle, there is transmitted a movement of a steering shaft which is rotated by manipulating a steering wheel to an input shaft of a steering gear by way of a universal joint.

The movement of the steering wheel is transmitted to the steering gear by way of a steering shaft which is provided rotatably at inside of a steering column and a middle shaft, and a direction of a wheel is steered by the steering gear. Ordinarily, the steering shaft and the input shaft of the steering gear cannot be provided on the same straight line relative to each other.

Therefore, in a background art, a middle shaft is provided between the steering shaft and the input shaft of the steering gear. An end portion of the middle shaft and the steering shaft as well as an end portion of the middle shaft and an end portion of the input shaft of the steering gear are coupled by way of universal joints. Power can be transmitted between the steering shaft and the input shaft which are not present on the same straight line.

In order to couple the middle shaft to the universal joint, there is configured a coupling cylinder portion in a shape of circular cylinder for inserting the middle shaft at a yoke of the universal joint. The coupling cylinder portion is configured by a pair of left and right flange portions which are extended from the coupling cylinder portion in a tangential direction. A slit (cut split) is configured between the flange portions. When a bolt which is inserted to bolt holes of the flange portions is strongly fastened in order to increase a rigidity of coupling the middle shaft and the universal joint, the flange portions are elastically deformed to narrow a groove width of the slit, and the middle shaft can be strongly fastened to be fixed to the coupling cylinder portion.

However, when the bolt is strongly fastened, there is inclined a bearing face of the flange portion with which a bearing face of a bolt head portion is brought into contact relative to the bearing face of the bolt head portion. Therefore, fastening is carried out by bringing the bearing face of the bolt head portion and the bearing face of the flange portion into an end tooth bearing state. There is reduced a frictional surface between the bearing face of the bolt head portion and the bearing face of the flange portion. As a result thereof, when a torque is applied to the universal joint in driving a vehicle, the bearing face of the bolt head portion which is brought into contact with the bearing face of the flange portion is elastically deformed, an external force is operated to the bearing face of the bolt head portion, and there is a case where the bolt is rotated unintentionally. Therefore, as shown in Japanese Examined Patent Application Publication No. Sho37 (1962)-17411, Japanese Examined Utility Model Publication No.Sho38(1963)-19014, and Japanese Unexamined Patent Application Publication No.2003-42129, there is adopted a method of making a bolt stop rotating by configuring a protruded portion at a bearing face of a bolt head portion and making the protruded portion bite a bearing face of a flange portion.

According to a bolt shown in Japanese Examined Patent Application Publication No. Sho37 (1962)-17411, Japanese Examined Utility Model Publication No. Sho38 (1963) -19014, and Japanese Unexamined Patent Application Publication No. 2003-42129, the bearing face of the bolt head portion is configured with the protruded portion which is protruded from the bearing face of the bolt head portion, and the protruded portion is made to bite the bearing face of the flange portion. Therefore, a resistance is added when the bearing face of the bolt head portion is made to bite the bearing face of the flange portion. Therefore, a variation in a torque is considerable when the bolt is fastened to the universal joint. It is difficult to fasten the bolt by a pertinent magnitude of an axial force for fastening the bolt. Further, the protruded portion is made to bite the bearing face of the flange portion and the bearing face of the flange portion is damaged. Therefore, there is a concern that it is difficult to reutilize the universal joint.

### SUMMARY

The present invention provides a flanged hexagon head bolt in which the bolt can be fastened by a stable fastening axial force, and the fastened bolt can be made to stop rotating.

According to a first aspect of the present invention, there is provided a flanged hexagon head bolt, in which in a flanged hexagon head bolt which is configured with a male screw at one end thereof and configured with a hexagon head attached with a circular disk shape flange at other end thereof, there are provided recessed and protruded portions which are configured in a ring-like shape at an outer periphery of a bearing face of the circular disk flange, and in which a height of the protruded portion is configured by a height which is not protruded from the bearing face of the circular disk shape flange.

According to a second aspect of the present invention, there is provided the flanged hexagon head bolt according to the first aspect of the present invention, in which a pair of flange portions which are configured by interposing a cut split are fastened by the bolt, and a bearing face of the flange portion which is inclined relative to the bearing face of the circular disk shape flange bites the recessed and protruded portions to thereby stop rotating the flanged hexagon head bolt.

According to a third aspect of the present invention, there is provided the flanged hexagon head bolt according to either of the first aspect and the second aspect of the present invention, in which the recessed and protruded portions are configured by triangular shapes.

According to a fourth aspect of the present invention, there is provided the flanged hexagon head bolt according to either of the first aspect and the second aspect of the present invention, in which the recessed and protruded portions are configured by trapezoidal shapes.

There is provided the flanged hexagon head bolt according to the aspects of the present invention, in which in the flanged hexagon head bolt which is configured with the male screw at the one end and configured with the hexagon head attached with the circular disk shape flange at the other end, there are provided the recessed and protruded portions which are configured in the ring-like shape at the outer periphery of the bearing face of the circular disk shape flange, and in which the height of the protruded portion is configured by the height which is not protruded from the bearing face of the circular disk shape flange.

Therefore, a variation in a fastening torque is small in the midst of fastening, and a fastening axial force of the bolt is stabilized. When the fastening has been finished, the recessed and protruded portions of the circular disk flange bite the bearing face of the flange portion to thereby enable to stop rotating the fastened bolt.

### BRIEF DESCRIPTION OF THE DRAWINGS

Fig. 1 is a side view of a total of a steering device which includes a universal joint that has a flanged hexagon head bolt according to a first embodiment of the present invention;

Fig. 2 is a front view enlarging the universal joint which has the flanged hexagon head bolt according to the first embodiment of the present invention;

Fig. 3 is a sectional view taken along a line A-A of Fig. 2 showing a state before strongly fastening the bolt;

Fig. 4 is a sectional view taken along a line B-B of Fig. 3;

Fig. 5 is a sectional view taken along the line A-A of Fig. 2 showing a state after strongly fastening the bolt;

Fig. 6 is a sectional view showing a state of cutting a flange and a hexagon head of the bolt of Fig. 5;

Fig. 7 is a sectional view enlarging portion P of Fig. 6;

Fig. 8A is a front view showing the bolt according to the first embodiment of the present invention;

Fig. 8B is a sectional view taken along line C-C of Fig. 8A;

Fig. 8C is a sectional view enlarging portion Q of Fig. 8A;

Fig. 9 is a partially-cut front view showing a state of cutting the flange and the hexagon head of the bolt according to the first embodiment of the present invention;

Fig. 10A is a front view showing a bolt according to a second embodiment of the present invention;

Fig. 10B is a sectional view taken along a line D-D of Fig. 10A; and

Fig. 10C is a sectional view enlarging portion R of Fig. 10A.

### DESCRIPTION

An explanation will be given of a first embodiment and a second embodiment of the present invention in reference to the drawings as follows.

### First Embodiment

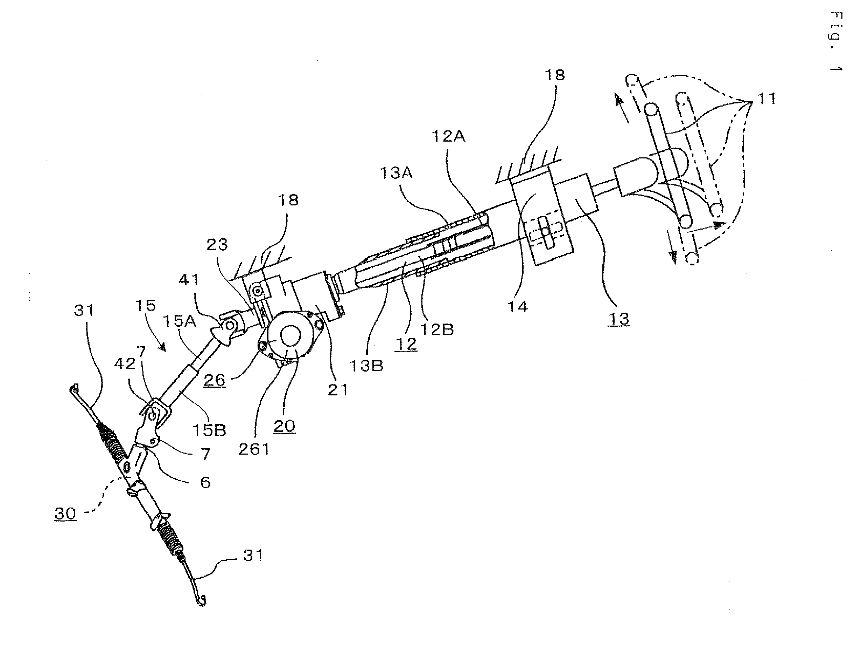

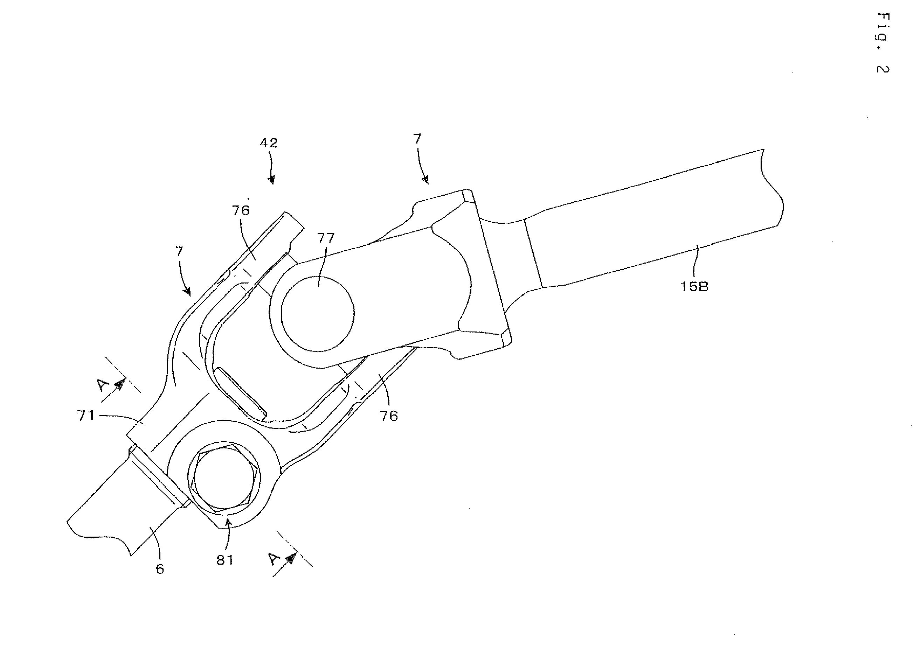

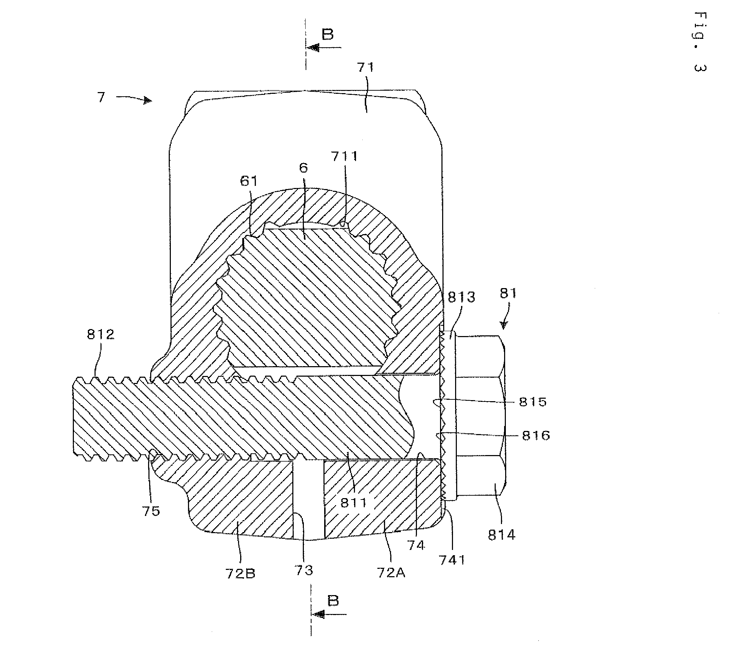

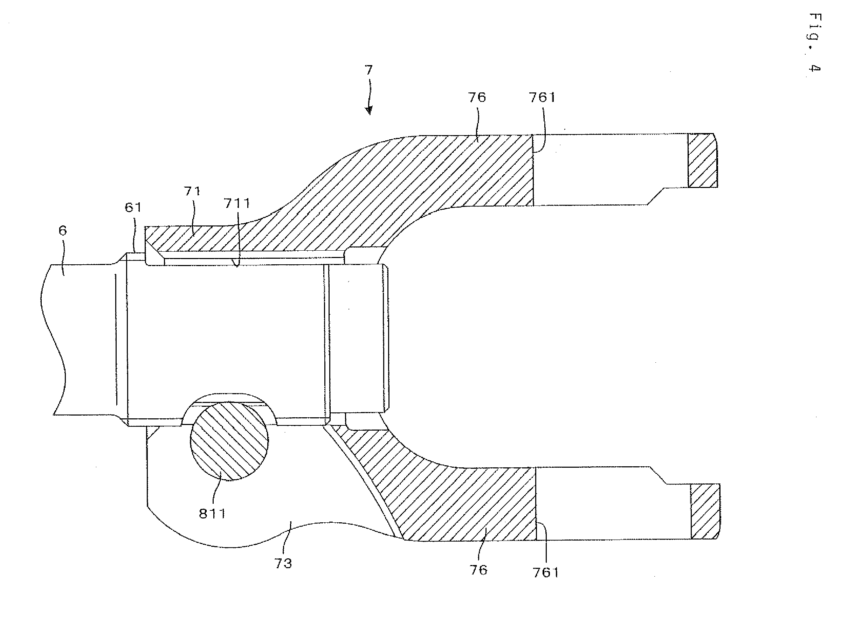

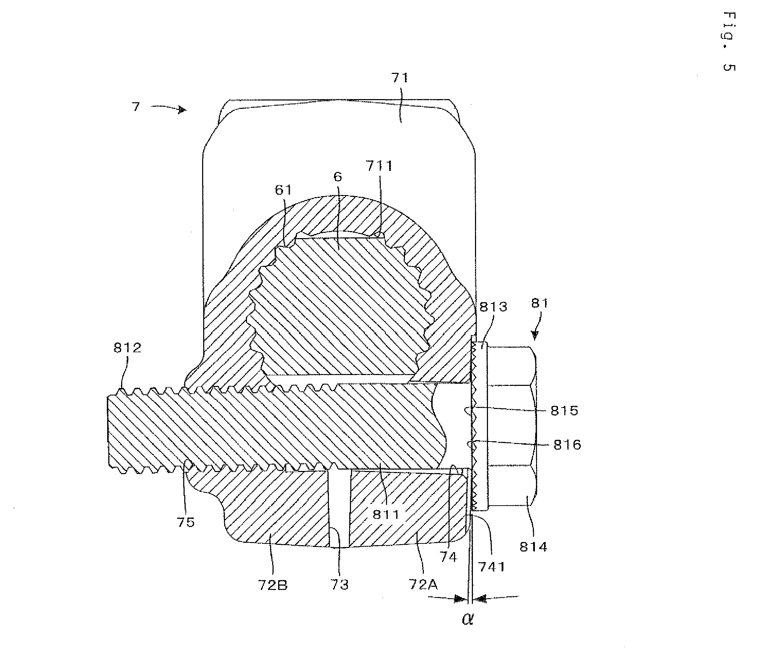

Fig. 1 is a side view of a total of a steering device which includes a universal joint which has a flanged hexagon head bolt according to a first embodiment of the present invention, Fig. 2 is a front view enlarging the universal joint which has the flanged hexagon head bolt according to the first embodiment of the present invention. Fig. 3 is a sectional view taken along a line A-A of Fig. 2 showing a state before strongly fastening the bolt, Fig. 4 is a sectional view taken along a line B-B of Fig. 3. Fig. 5 is a sectional view taken along the line A-A of Fig. 2 showing a state after strongly fastening the bolt.

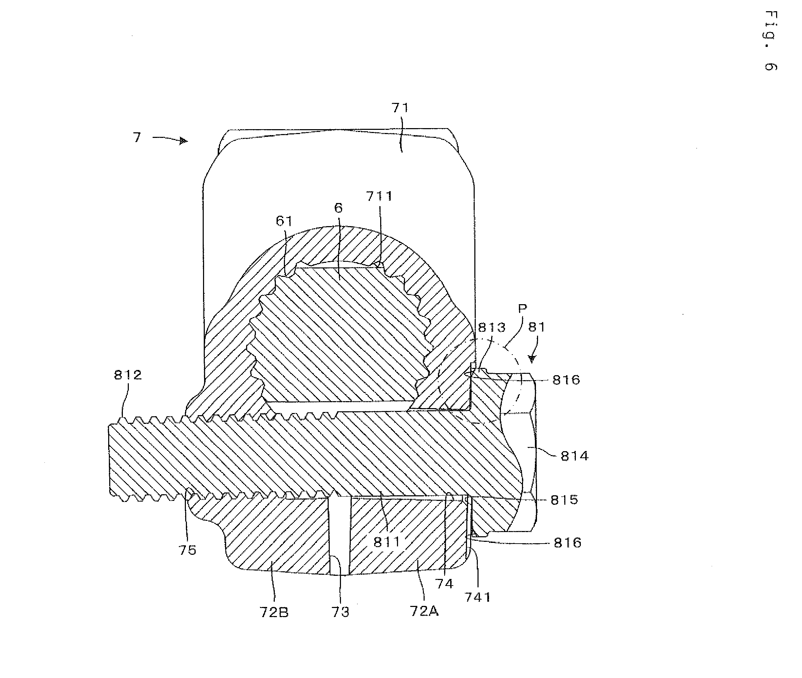

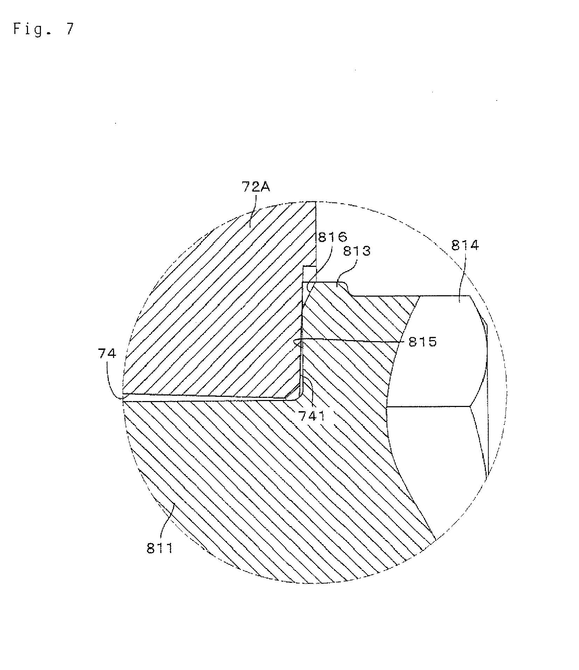

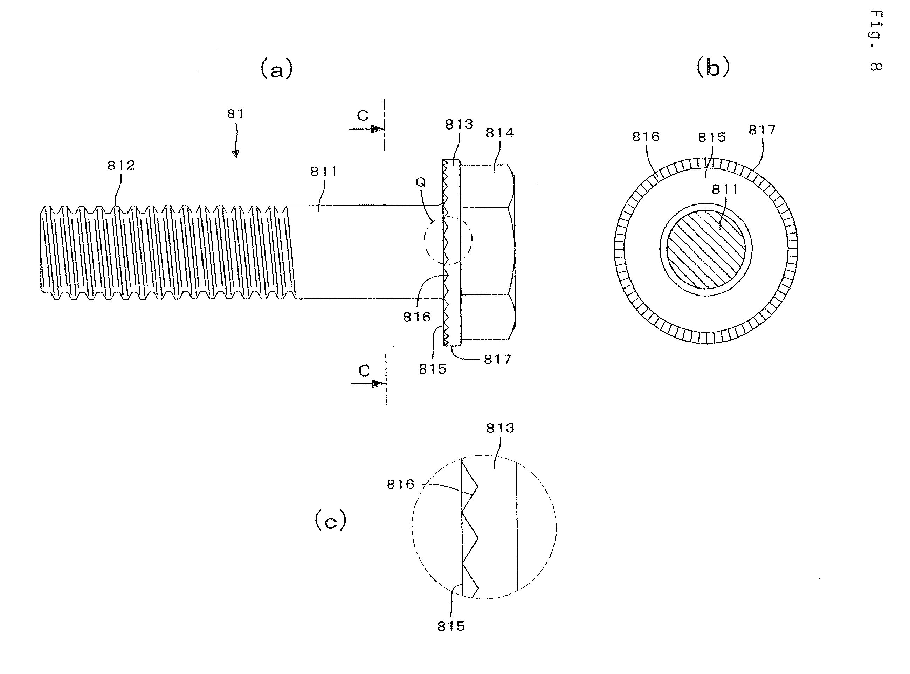

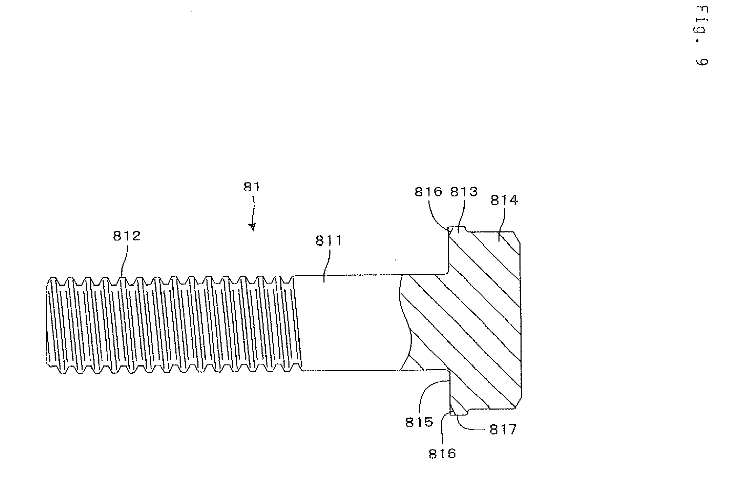

Fig. 6 is a sectional view showing a state of cutting a flange and a hexagon head of the bolt of Fig. 5, Fig. 7 is a sectional view enlarging portion P of Fig. 6. Fig. 8A is a front view showing the bolt according to the first embodiment of the present invention, Fig. 8B is a sectional view taken along a line C-C of Fig. 8A, and Fig. 8C is a sectional view enlarging portion Q of Fig. 8A. Fig. 9 is a partially-cut front view showing a state of cutting the flange and the hexagon head of the bolt according to the first embodiment of the present invention.

As shown in Fig. 1, according to a first embodiment of the present invention, there is provided a steering device which includes a universal joint having a flanged hexagon head bolt. The steering device includes a steering shaft 12 which can mount a steering wheel 11 on a vehicle body rear side (right side of Fig. 1), a steering column 13 which is inserted with the steering shaft 12, an assist device (steering assist portion) 20 for adding an assist torque to the steering shaft 12, and a steering gear 30 which is connected to a vehicle body front side (left side of Fig. 1) of the steering shaft 12 by way of a rack/pinion mechanism, not illustrated.

In the steering shaft 12, a female steering wheel 12A and a male steering shaft 12B are fitted by a spline to be able to transmit a rotating torque and to be able to move relative to each other in an axial direction. Therefore, a total length of the female steering shaft 12A and the male steering shaft 12B can be shrunk by moving the spline fitting portions relative to each other in a case of a collision.

Further, according to the steering column 13 in a cylindrical shape which is inserted with the steering shaft 12 mentioned above, there are telescopically movably combined an outer column 13A and an inner column 13B. Therefore, the steering column 13 is configured by a so-called collapsible structure where when an impact is applied in an axial direction in a case of a collision, a total length thereof is shrunk while absorbing energy by the impact.

Further, an end portion on a vehicle front side of the inner column 13B is press-fitted to be fixed to an end portion on a vehicle body rear side of a gear housing 21. Further, an end portion on a vehicle body front side of the male steering shaft 12B is made to pass through an inner side of the gear housing 21 to be connected to an end portion on a vehicle body rear side of an input shaft, not illustrated, of the assist device 20.

The steering column 13 is supported by a portion of a vehicle body 18 of a lower face of a dashboard or the like by a support bracket 14 at a middle portion thereof. Further, a securing portion, not illustrated, is provided between the support bracket 14 and the vehicle body 18. In a case where the support bracket 14 is applied with an impact in a direction of being directed to a vehicle body front side, the support bracket 14 is detached from the securing portion, and is moved to the vehicle body front side.

Further, also an upper end portion of the gear housing 21 is supported by a portion of the vehicle body 18 . Further, in the case of the present embodiment, a position in a vehicle body front and rear direction and a height direction of the steering wheel 11 are made to be able to be adjusted freely by providing a tilt mechanism and a telescopic mechanism. The tilt mechanism and the telescopic mechanism are well known in the background art, and are not featured portions of the present invention, and therefore, a detailed explanation thereof will be omitted.

There is connected an output shaft 23 which is protruded from an end face on a vehicle body front side of the gear housing 21 to a rear end portion of a middle shaft 15 by way of a universal joint (upper side universal joint) 41. Further, a front end portion of the middle shaft 15 is connected with a pinion shaft (hereinafter, referred to as shaft) 6 by way of other universal joint (lower side universal joint) 42. According to the middle shaft 15, a vehicle body rear side of a female middle shaft (female shaft) 15B is outwardly fitted to a vehicle body front side of a male middle shaft (male shaft) 15A. The male middle shaft 15A and the female middle shaft 15B are fitted to each other to be able to transmit the rotating torque and to be able to move relative to each other in an axial direction.

A pinion, not illustrated, is configured at a lower end (an end portion on a vehicle body front side) of the shaft 6. Further, a rack, not illustrated, is brought in mesh with the pinion. Rotation of the steering wheel 11 moves a tie rod 31 and steers a wheel, not illustrated.

The gear housing 21 of the assist device 20 is fixed with a case 261 of an electric motor 26. A worm is coupled to a rotating shaft, not illustrated, of the electric motor 26. A worm wheel, not illustrated, is attached to the output shaft 23, and the worm of the rotating shaft of the electric motor 26 is brought in mesh with the worm wheel.

Further, a torque sensor, not illustrated, is provided at a surrounding of a middle portion of the output shaft 23. The torque sensor detects a direction and a magnitude of a torque which is applied from the steering wheel 11 to the steering shaft 12. The electric motor 26 is driven in accordance with a detected value thereof. An assist torque is generated at the output shaft 23 in a predetermined direction and in a predetermined magnitude by way of a speed reducing mechanism configured by the worm and the worm wheel. The assist device of generating the assist torque is not limited to an assist device of an electric type but may be an assist device of a hydraulic type.

Fig. 2 through Fig. 7 show a universal joint which has a flanged hexagon head bolt according to the first embodiment of the present invention, and show an example of applying the universal joint to a portion of coupling a yoke 7 on one side of the universal joint 42 of Fig. 1 and the shaft 6. The universal joint which has the flanged hexagon head bolt of the present invention may be applied to a portion of coupling the universal joint 41 and the male middle shaft 15A, or a portion of coupling the universal joint 41 and the output shaft 23 in Fig. 1.

Fig. 2 through Fig. 7 show a portion of coupling one yoke 7 of the pair of yokes 7 which configure the universal joint 42 having the flanged hexagon head bolt according to the first embodiment of the present invention and the shaft 6. A left side of the yoke 7 is configured with a coupling cylinder portion 71 substantially in a shape of a circular cylinder. The shaft 6 is inserted in parallel with an axial direction of the coupling cylinder portion 71 from left sides of Fig. 2 and Fig. 4 to a female serration 711 which is configured at an inner peripheral face of the coupling cylinder portion 71. Further, a male serration 61 which is configured at an outer peripheral face of the shaft 6 is serration-engaged with the female serration 711 to be configured to be able to transmit a rotating torque.

There are configured a pair of coupling arm portions 76 which are provided integrally with the coupling cylinder portion 71 on a right side of the yoke 7. The coupling arm portions 76 are configured with bearing holes 761 for axially supporting a joint cross 77.

The coupling cylinder portion 71 of the yoke 7 is configured with a pair of left and right flange portion 72A and 72B which are extended from the coupling cylinder portion 71 in a tangential direction. There is configured a slit (cut split) 73 communicating with the female serration 711 between the flange portions 72A and 72B. The slit 73 is configured over a total length in an axial direction of the coupling cylinder portion 71.

At the flange portion 72A on one side (right side of Fig. 3) of the pair of flange portions 72A and 72B, there is configured a bolt hole 74 for inserting a bolt (flanged hexagon head bolt) 81 shown in Figs. 8A, 8B, and 8C, and the other flange portion 74B is configured with a female screw 75. The female screw 75 is configured concentrically with the bolt hole 74.

The female screw 75 is screwed with a male screw 812 which is configured on a left side of a bolt shaft portion 811 of the bolt 81. Further, the flange portion 72A is configured with a flat bearing face 741 on a side of an opening portion (right side of Fig. 3) of the bolt hole 74. As shown by Figs. 8A, 8B, and 8C, on a right side of the bolt shaft portion 811, there is configured a hexagon head 814 which is attached with a circular disk shape flange 813. A diameter of the circular disk shape flange 813 is configured to be larger than a width across corners of the hexagon head 814 to thereby enlarge an area of a bearing face.

A bearing face 815 of the circular disk shape flange 813 is configured with recessed and protruded portions 816 in a ring-like shape at an outer periphery of the flat bearing face 815. The recessed and protruded portions 816 are configured up to an outer peripheral edge 817 of the circular disk shape flange 813. The recessed and protruded portions 816 are configured by triangular shapes, and a height of the protruded portion is configured by a height which is not protruded from the bearing face 815 of the circular disk shape flange 813. The recessed and protruded portions 816 are configured by the ring-like shape, and therefore, configured by a shape which is easy to form simultaneously by pressing which uses a punch and a die when the bolt 81 is formed.

As shown by Fig. 3, when the bolt 81 is fastened, the flat bearing face 815 of the circular disk shape flange 813 is brought into face contact with the flat bearing face 741 of the flange portion 72A. The height of the protruded portion of the recessed and protruded portions 816 is configured by the height which is not protruded from the bearing face 815 of the circular disk shape flange 813. Therefore, the recessed and protruded portions 816 do not bite the bearing face 741 of the flange portion 72A. Therefore, up to the stage, the bolt 81 is the same as a bolt which is not provided with the recessed and protruded portions 816, a variation in a fastening torque is small, and a fastening axial force of the bolt is stabilized.

As shown from Fig. 5 to Fig. 7, when the bolt 81 is further fastened, the bearing face 741 of the flange portion 72A is inclined and the recessed and protruded portions 816 of the circular disk shape flange 813 start biting an inclined root portion (upper portions of Fig. 5 through Fig. 7) of the bearing face 741 of the flange portion 72A. The recessed and protruded portions 816 are configured in triangular shapes. Angular portions of the triangular shapes bite the bearing face 741 to thereby effectively enable to stop rotating the bolt 81. When fastening of the bolt 81 has been finished, the bearing face 741 of the flange portion 72A is inclined by an angle α relative to the bearing face 815 of the circular disk shape flange 813 of the bolt 81. The recessed and protruded portions 816 of the circular disk shape flange 813 bite the bearing face circular disk 41 of the flange portion 72A.

Therefore, the variation in the fastening torque is small in the midst of fastening. When the fastening has been finished, the recessed and protruded portions 8 16 of the circular disk shape flange 813 bite the bearing face 741 of the flange portion 72A to thereby enable to stop rotating the fastened bolt 81. According to the first embodiment of the present invention, the recessed and protruded portions 816 bite the bearing face 741 of the flange portion 72A immediately before finishing the fastening. Therefore, the damage of the bearing face 741 of the flange portion 72A is minimized, and the universal joint can be reutilized.

As materials of the yoke 7, there are used a cold-rolled steel sheet (SPCC, SPCD), a carbon steel product for machine construction (SC), a cast iron (FC) and the like. As a material of the bolt 81, there is used an SC product of a carbon steel or the like, a carbon steel wire product for cold heading and cold rolling (SWCH) or the like. It is preferable to increase an effect of stopping to rotate the bolt 81 by making the recessed and protruded portions 816 easy to bite the bearing face 741 by using a material a hardness of which is higher than that of the yoke 7.

### Second embodiment

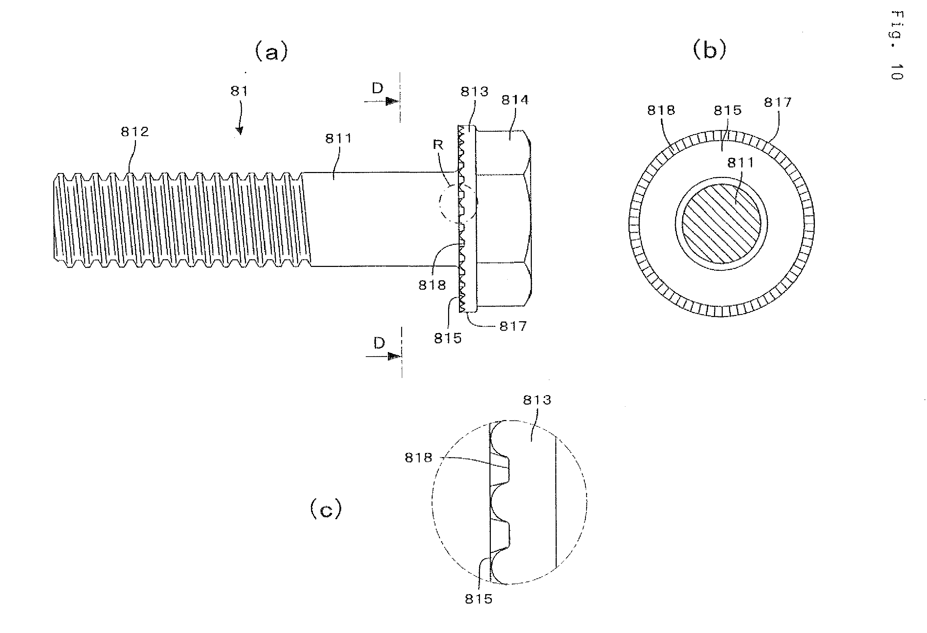

Next, an explanation will be given of a second embodiment of the present invention. Fig. 10A is a front view showing a bolt according to the second embodiment of the present invention. Fig. 10B is a sectional view taken along a line D-D of Fig. 10A. Fig. 10C is a sectional view enlarging portion R of Fig. 10A. In the following explanation, an explanation will be given only of a structure portion which differs from that of the first embodiment described above, and a duplicated explanation thereof will be omitted. Further, an explanation will be given by attaching the same numeral to the same part.

The second embodiment is an example of changing the shapes of the recessed and protruded portions of the circular disk shape flange 813. That is, as shown by Figs. 10A, 10B, and 10C, similar to the first embodiment, the bolt 81 of the second embodiment is configured with the male screw 812 on the left side of the bolt shaft portion 811 of the bolt 81, and there is configured the hexagon head 814 which is attached with the circular disk shape flange 813 on the right side of the bolt shaft portion 811. The diameter of the circular disk shape flange 813 is configured to be larger than the width across corners of the hexagon head 814 to thereby increase the area of the bearing face.

The bearing face 815 of the circular disk shape flange 813 is configured with recessed and protruded portions 81 8 in a ring-like shape at the outer periphery of the flat bearing face 815. The recessed and protruded portions 811 are configured up to the outer peripheral edge 817 of the circular disk shape flange 813. According to the second embodiment, the recessed and protruded portions 818 are con figured by trapezoidal shapes, and a height of the protruded portion is configured by a height which is not protruded from the bearing face 815 of the circular disk shape flange 813. The recessed and protruded portions 818 are configured by the ring-like shape, and therefore, configured by a shape which is easy to be formed simultaneously by pressing using a punch and a die when the bolt 81 is formed.

According to the second embodiment, the recessed and protruded portions 818 are configured in the trapezoidal shapes, and a front end of the protruded portion does not configure an edge. Therefore, when the recessed and protruded portions 818 are made to bite the inclined root portion of the bearing face 741 of the flange portion 72A by fastening the bolt 81, in comparison with the triangular shape of the first embodiment, the damage of the bearing face 741 of the flange portion 72A is restrained to be small, and the universal joint can be reutilized more than that of the first embodiment.

Also according to the second embodiment of the present invention, the variation in the fastening torque is small in the midst of fastening. When the fastening has been finished, the recessed and protruded portions 818 of the circular disk shape flange 813 bite the bearing face 741 of the flange portion 72A to thereby enable to stop rotating the fastened bolt 81.

According to the embodiments described above, the explanation has been given of the example of applying the present invention to the yoke which is configured with the coupling cylinder portion 71 substantially in the circular cylinder shape. However, the present invention may be applied to a yoke having a coupling cylinder portion having a section substantially in a channel-like shape. Further, according to the embodiments described above, the explanation has been given of the examples of applying the present invention to a screwed bolt system in which the female screw is configured at one of the flange portions 72A and 72B, the male screw 812 of the bolt shaft portion 811 is screwed to the female screw, and the flange portions 72A and 72B are fastened. However, as other example, the present invention may be applied to a through bolt system in which bolt holes (unloaded holes) are configured at both of the flange portions 72A and 72B of the yoke, and the flange portions 72A and 72B are screwed to fasten by a bolt and a nut.

## Claims

1. A flanged hexagon head bolt, wherein in a flanged hexagon head bolt which is configured with a male screw at one end thereof and configured with a hexagon head attached with a circular disk shape flange at other end thereof, there are provided recessed and protruded portions which are configured in a ring-like shape at an outer periphery of a bearing face of the circular disk flange, and in which a height of the protruded portion is configured by a height which is not protruded from the bearing face of the circular disk shape flange.

2. The flanged hexagon head bolt according to claim 1, wherein a pair of flange portions which are configured by interposing a cut split are fastened by the bolt, and a bearing face of the flange portion which is inclined relative to the bearing face of the circular disk shape flange bites the recessed and protruded portions to thereby stop rotating the flanged hexagon head bolt.

3. The flanged hexagon head bolt according to either claim 1 or claim 2, wherein the recessed and protruded portions are configured by triangular shapes.

4. The flanged hexagon head bolt according to either claim 1 or claim 2, wherein the recessed and protruded portions are configured by trapezoidal shapes.
